Europäisches Patentamt

European Patent Office

Office européen des brevets

(19)

(11) Veröffentlichungsnummer: **0 320 498**
A2

# (12) EUROPÄISCHE PATENTANMELDUNG

(21) Anmeldenummer: 89102388.9

(22) Anmeldetag: 19.06.86

(51) Int. Cl.⁴: **B 25 J 9/02**
B 25 J 19/00

(30) Priorität: 25.07.85 AT 2210/85

(43) Veröffentlichungstag der Anmeldung:
14.06.89 Patentblatt 89/24

(84) Benannte Vertragsstaaten: **DE FR GB IT SE**

(60) Veröffentlichungsnummer der früheren Anmeldung nach
Art. 61 EPÜ: **0 210 974**

(71) Anmelder: **SIMMERING-GRAZ-PAUKER
AKTIENGESELLSCHAFT
Brehmstrasse 16
A-1110 Wien (AT)**

(72) Erfinder: **Winter, Alfred, Ing.
Heinrich-Collin-Strasse 36
A-1140 Wien (AT)**

**Schendl, Adolf, Dipl.-Ing.
Mautner-Markhof-Casse 13
A-1110 Wien (AT)**

(74) Vertreter: **Köhler-Pavlik, Johann, Dipl.-Ing.
Margaretenplatz 5
A-1050 Wien (AT)**

(54) Industrieroboter.

(57) Bei einem Industrieroboter der Portalbauweise ist ein Holm (7) in Z-Richtung, und ein den Holm (7) tragender Wagen (1) auf einer Brücke (2) in Y-Richtung verschiebbar auf Rollen gelagert. Der Holm (7) trägt auf zwei einander gegenüberliegenden Seiten prismatische Schienen, die als Lauffläche für die Rollenpaare einer Rollenführung im Wagen (1) dienen. Am unteren Ende des Holmes (7), Trägers od.dgl. ist eine Greifervorrichtung für das Werkstück od.dgl. angebracht. Der Holm (7) od.dgl. ist mit einer hydraulischen Ausgleichseinrichtung verbunden, welche aus einem am Wagen (1) befestigten Hydraulikzylinder (100) besteht, dessen Kolbenstange (102) mit dem Holm (7) od.dgl. verbunden ist.

EP 0 320 498 A2

**Beschreibung**

## Industrieroboter

Die Erfindung betrifft einen Industrieroboter der Portalbauweise für Handhabungs- und/oder Fertigungs-und/oder Prüfaufgaben an einem Werkstück, Geräteteil od.dgl. in X-und/oder Y-Richtung sowie in Z-Richtung, bestehend aus einem mittels zumindest vier Rollen auf einer Brücke fahrbar gelagerten Wagen, auf welchem eine Rollenführung für einen lotrecht verschiebbaren Holm, Träger, od.dgl. angeordnet ist, an dessen unterem Ende eine Greifvorrichtung für das Werkstück od.dgl. angebracht ist.

Zu den wichtigsten Auswahlkriterien bei Industrierobotern zählen Traglast, Wiederholgenauigkeit, Verfahrweg, Geschwindigkeit und Beschleunigung. Die Traglast bekannter Portalgeräte bewegt sich mischen 10 und 100 kg, bei einer Wiederholgenauigkeit von ± 0,025 bis 1 mm, bei Geschwindigkeiten von 0.2 bis 2m/s, und bei Verfahrwegen von 0,4 bis 15 m in X-Richtung, 0,5 bis 5 m in Y-Richtung und 0,1 bis 2 m in Z-Richtung.

Die bisherigen Industrieroboter waren für verhältnismäßig kleine Lasten bestimmt und hatten daher auch ein kleines Eigengewicht der Hubkonstruktion, wodurch das Rollengewicht relativ gering war. Für diese Konstruktionen konnte die motorische Kraft sowohl zum Heben als auch zum Senken des Holmes und der Nutzlast herangezogen werden. Für schwere Lasten, für welche der gegenständliche Industrieroboter bestimmt ist, wären nach dem Stand der Technik große Motoren notwendig, die sowohl von der Kostenseite her als auch für die Ausbildung der Gesamtkonstruktion Nachteile bringen würden.

Aufgabe der vorliegenden Erfindung ist die Schaffung von Maßnahmen, durch welche die Motoren von größtem Teil des Eigengewichts der Hubkonstruktion befreit werden, sodaß die Antriebe im wesentlichen nur eine gewisse Restlast der Eigenkonstruktion des Hubmechanismus und die Nutzlast zu bewerkstelligen haben.

Zur Lösung dieser Aufgabe wird bei einem Industrieroboter der eingangs erwähnten Art erfindungsgemäß vorgeschlagen, daß der Holm od.dgl. mit einer hydraulisch betriebenen Gewichtsausgleicheinrichtung verbunden ist.

Hiebei ist es zweckmäßig, wenn die Gewichtsausgleichseinrichtung aus einem am Wagen befestigten Hydraulikzylinder besteht, dessen Kolbenstange mit dem Holm od.dgl. verbunden ist, wobei vom Hydraulikzylinder ein Hydraulikschlauch zu einem Druckbehälter führt, in welchem die Hydraulikflüssigkeit unter dem Druck eines gasförmigen Mediums steht.

Weitere Merkmale und Einzelheiten der Erfindung werden nachfolgend anhand eines bevorzugten Ausführungsbeispiels mit Hilfe der Figuren beschrieben. Es zeigen

Fig. 1 eine schematische Darstellung eines Portalgerätes in perspektivischer Ansicht,

Fig. 2,3 und 4 ein Ausführungsbeispiel eines erfindungsgemäßen Portalgerätes in Auf-, Grund- und Seitenriß,

Fig. 5 ,6 und 7 einen Rollenträger für eine Rolle, die auf einer flachen Schiene läuft in Auf-,Grund-und Seitenriß,

Fig. 8,9 und 10 einen Rollenträger für ein Rollenpaar, das auf einer prismatischen Schiene läuft in Auf-,Grund- und Seitenriß,

Fig. 11,12 und 13 einen gefederten Rollenträger für ein Rollenpaar, das auf einer prismatischen Schiene läuft in Auf-,Grund-und Seitenriß,

Fig. 14 eine Gewichtsausgleicheinrichtung für den Holm im Aufriß,

Fig. 15 eine Seitenansicht eines erfindungsgemäßen Greifers teilweise im Schnitt,

Fig. 16 die Rückansicht des Greifers nach Fig. 15,

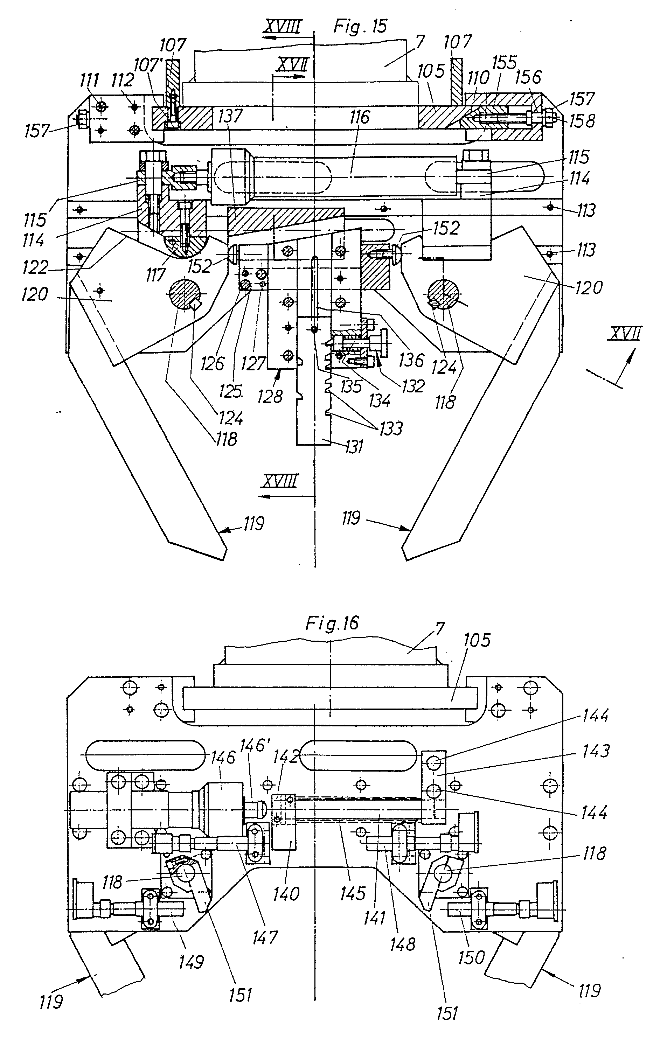

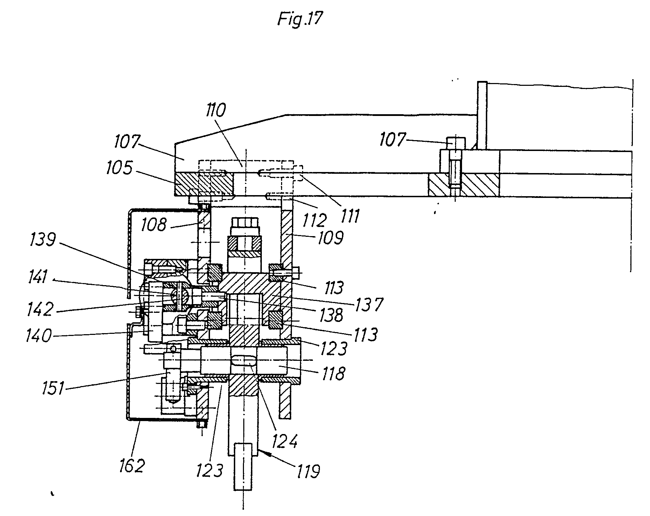

Fig. I7 einen Schnitt nach den Linien XVII-XVII des Greifers nach Fig. 15, und

Fig. 18 einen Schnitt nach den Linien XVIII-XVIII des Greifers nach Fig. 15.

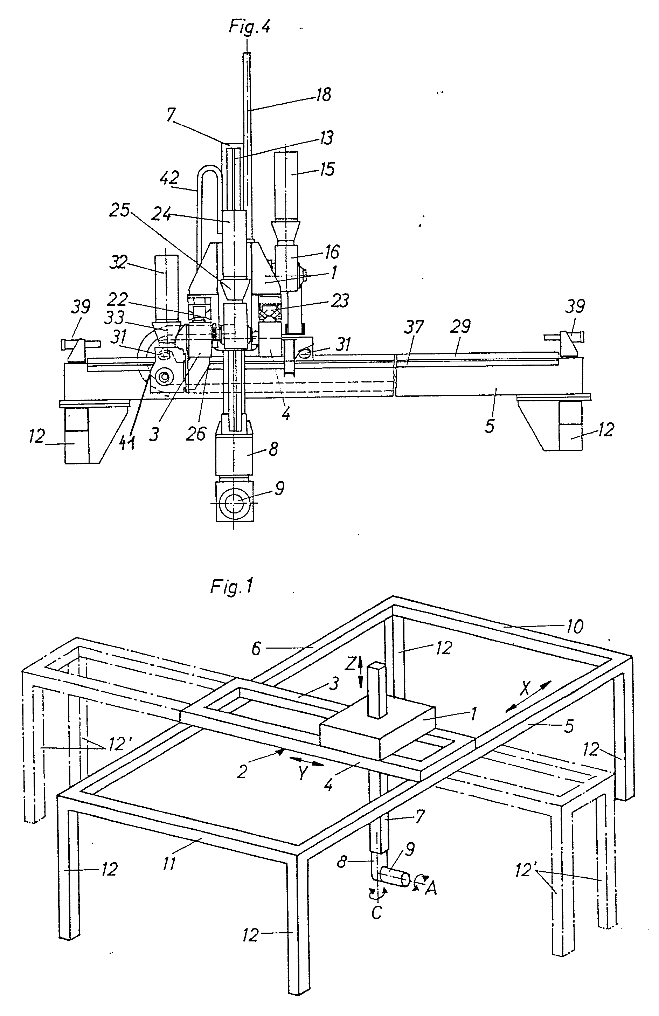

In Fig. 1 bezeichnet 1 einen Wagen, der auf einer Brücke 2 in Y-Richtung auf Rollen läuft. Die Brücke besteht aus zwei an den Enden verbundenen Querträgern 3 und 4. Die Brücke ist an ihren Enden auf Rollen gelagert, die auf zwei Längsträgern 5 und 6 aufliegen, so daß die Brücke in X-Richtung verschiebbar ist.

Eine lotrechte Rollenführung im Wagen 1 ermöglicht die Verschiebung eines Holms, Trägers 7, od.dgl. in Z-Richtung. Am unteren Ende des Holm 7 ist eine Greifvorrichtung (nicht dargestellt) vorgesehen, wobei gegebenenfalls zwischen dem Holm 7 und der Greifvorrichtung Antriebsvorrichtungen 8 und 9 vorgesehen sein können, die eine Drehung der Greifvorrichtung um die Drehachsen C und A ermöglichen. Die Längsträger sind an den Enden über Querträger 10 und 11 verbunden und ruhen auf Endstützen 12, um das Portal zu bilden. Erforderlichenfalls können zwischen den Endstützen Zwischenstützen (nicht dargestellt) angeordnet sein. Mit strichpunktierten Linien ist eine Verlängerung der Querträger 3 und 4 angedeutet, die ebenfalls an den Enden verbunden sind und auf Endstützen 12' ruhen, wobei die Längsträger 5 und 6 samt den Endstützen entfallen, sodaß der Wagen nur in Y-Richtung verschiebbar ist. Auch bei diesem Beispiel können zwischen den Endstützen 12' zusätzliche Zwischenstützen (nicht dargestellt) angeordnet sein. Auf diese Weise kann einerseits ein im Flächenportalgerät und anderseits ein Linienportalgerät realisiert werden.

Das in Fig. 1 bis 3 dargestellte Portalgerät ist beispielsweise als Flächen-Portalgerät ausgebildet, wobei für die zur Fig. 1 gleichen Teile die gleichen Bezugszeichen verwendet werden.

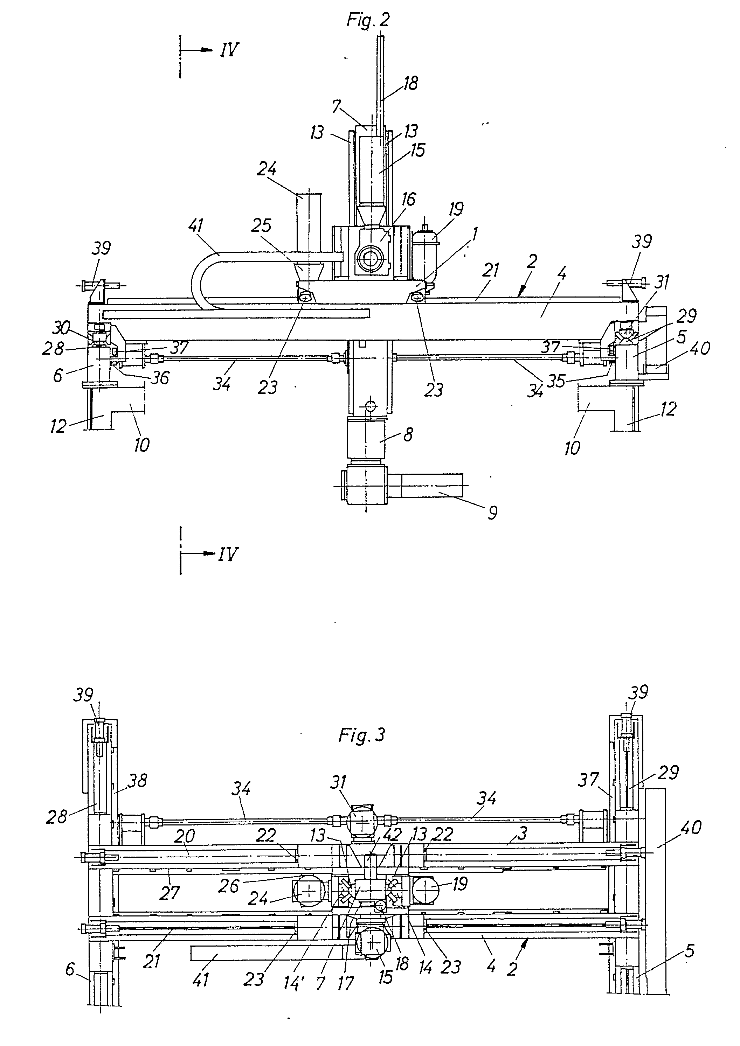

Wie aus Fig. 3 ersichtlich ist, weist der Holm 7 ein rechteckförmiges Hohlprofil auf, wobei auf zwei einander gegenüberliegenden Seiten des Holms 7 jeweils eine prismatische Schiene 13 angeordnet ist, die z.B. mittels Schrauben (nicht dargestellt) am Holm 7 befestigt ist. Im Wagen 1 sind vier Rollenpaare 14 bzw. 14' angeordnet, die eine Rollenführung für den Holm 7 bilden, indem jeweils zwei Rollenpaare 14 bzw.14' übereinanderliegend auf den beiden prismatischen Schienen 13 anliegen. Wie später erläutert wird, sind auf einer Seite des Holms 7 die zwei Rollenpaare 14 starr gelagert, während auf der anderen Seite die zwei Rollenpaare 14' federnd gegen den Holm 7 abgestützt sind, damit mechanische Spannungen, bedingt durch Wärmeausdehnung od.dgl. kompensiert werden. Eine Antriebseinrichtung 15 treibt über ein Getriebe 16 ein Zahnrad 17 an, das in eine am Holm 7 in Längsrichtung befestigte Zahnstange (nicht dargestellt) eingreift, sodaß der Holm 7 in Z-Richtung verschiebbar ist. Damit der Holm 7 unter Last rascher und leichter bewegt werden kann, ist ein hydraulischer Zylinder 18 vorgesehen, dessen Kolbenstange mit dem Holm 7 verbunden ist, wie später erläutert wird.

Auf dem Querträger 3 ist eine flache Schiene 20, z.B. durch Schraubung befestigt, während auf dem Querträger 4 eine prismatische Schiene 21 ebenfalls durch Schraubung befestigt ist. Dementsprechend sind auf der Unterseite des Wagens 1 oberhalb des Querträgers 3 zwei Rollen 22 befestigt, die auf der flachen Schiene 20 laufen, während ebenfalls auf der Unterseite des Wagens 1 oberhalb des Querträgers 4 zwei Rollenpaare 23 befestigt sind, die auf der prismatischen Schiene 21 laufen. Die Ausbildung der Rollen 22 bzw. der Rollenpaare 23 wird später erläutert. Eine zweite Antriebseinrichtung 24 treibt über ein Getriebe 25 ein Zahnrad 26 an, das in eine am Querträger 3 in Längsrichtung befestigte Zahnstange 27 eingreift, sodaß der Wagen 1 in Y-Richtung verfahrbar ist. Erforderlichenfalls kann auch am Querträger 4 eine Zahnstange befestigt sein, in die ein zusätzliches vom Getriebe 25 angetriebenes Zahnrad eingreift. Auf dem Längsträger 6 ist eine flache Schiene 28 z.B. durch Schraubung befestigt, während auf dem Längsträger 5 eine prismatische Schiene 29 ebenfalls durch Schraubung befestigt ist. Dementsprechend sind auf der Unterseite der Brücke 2 bzw. der Querträger 3 und 4 oberhalb des Längsträgers 6 zwei Rollen 30 befestigt, die auf der flachen Schiene 28 laufen, während ebenfalls auf der Unterseite der Brücke 2 bzw. der Querträger 3 und 4 oberhalb des Längsträgers 5 zwei Rollenpaare 31 befestigt sind, die auf der prismatischen Schiene 29 laufen. Eine dritte Antriebseinrichtung 32 treibt über ein Getriebe 33 und über je eine Kardanwelle 34 zwei Zahnräder 35 und 36 an, die in jeweils an den Längsträgern 5 und 6 befestigten Zahnstangen 37 und 38 eingreifen, sodaß die Brücke 2 in X-Richtung verfahrbar ist. Gegebenenfalls kann eine der Kardanwellen 34 bzw. Zahnräder 35,36 und Zahnstangen 37,38 entfallen, wenn z.B. die Brückenlänge relativ kurz ist.

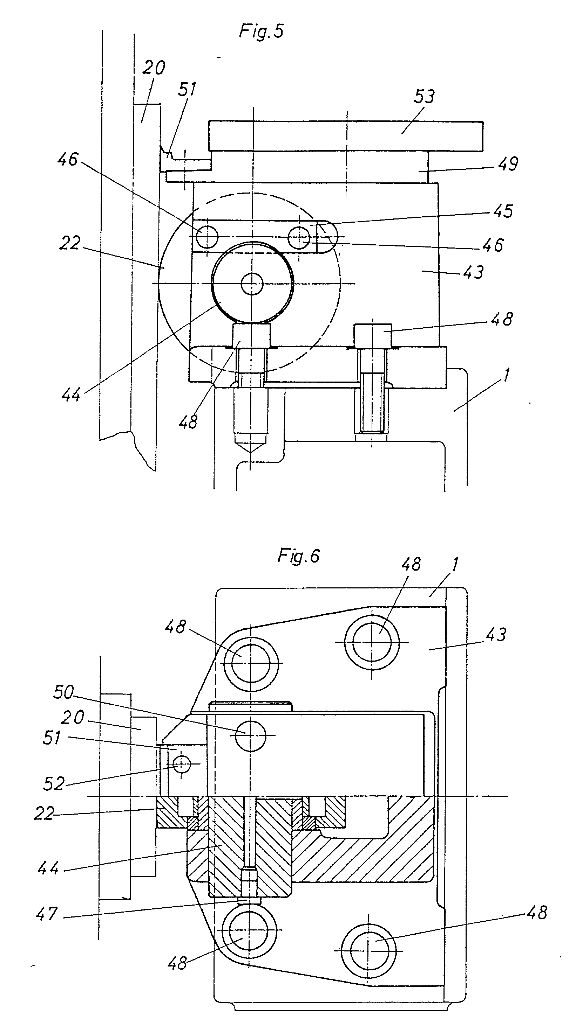

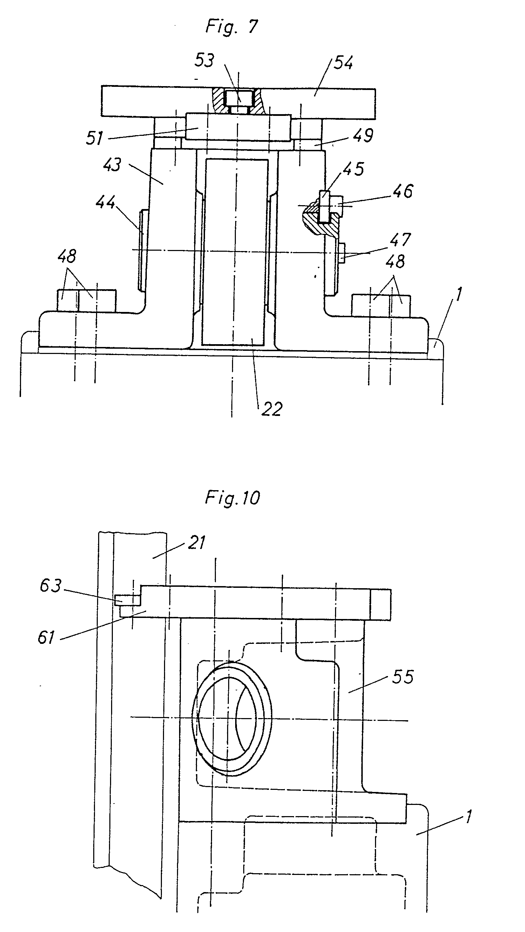

An den Enden der Brücke 2 bzw. der Längsträger 5 und 6 sind jeweils Stoßdämpfer 39 angebracht. Die Energiezufuhr zu den Antriebseinrichtungen 8,9,15,24 und 32 erfolgt über flexible elektrische und/oder pneumatische Leitungen 40,41 und 42. Als Antriebseinrichtungen werden vorzugsweise Elektromotore verwendet. Für die zur Steuerung bzw. Regelung der Antriebseinrichtung erforderliche Erfassung der Lage, Geschwindigkeit, Verzögerung etc. werden an sich bekannte Meßwertgeber, Sensoren, Annäherungsschalter usw. eingesetzt. Die Fig. 5 bis 7 zeigen den Aufbau eines Rollenträgers für die Rollen 22 und 30, die auf den flachen Schienen 20 und 30 des Querträgers 3 bzw. des Längsträgers 6 laufen. Ein Lagergehäuse 43 trägt einen Lagerbolzen 44, auf welchem z.B. die Rolle 22 befestigt ist, die vorzugsweise als Zylinderrollenlager ausgebildet ist. Der Lagerbolzen 44 ist in axialer Richtung durch ein Sicherungsblech 45 gesichert, welches mittels zwei Schrauben 46 am Lagergehäuse 43 befestigt ist. Über einen Schmiernippel 47 erfolgt die Schmierung des Zylinderrollenlagers. Mittels vier Schrauben 48 wird das Lagergehäuse 43 z.B. mit dem Wagen 1 verbunden. An der Stirnseite des Lagergehäuses 43 ist eine Abstreiferplatte 49 mittels zwei Schrauben 50 befestigt. Am Ende der Abstreiferplatte 49 ist ein Abstreifer 51 aus Gummi od.dgl. mittels zwei Schrauben 52 befestigt, wodurch ein auf der Schiene 20 haftender Schmutz oder Staub entfernt wird. Eine auf der Abstreiferplatte 49 mittels einer Schraube 53 angeschraubte Scheibe 54 dient als Angriffsfläche für die Stoßdämpfer 39 nach Fig. 1 bis 3.

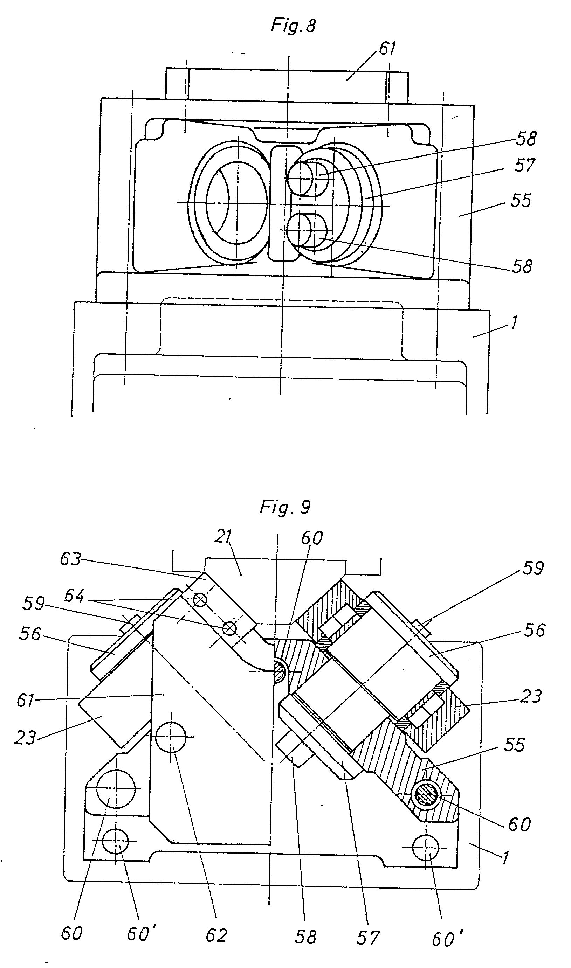

Die Fig. 8 bis 10 zeigen den Aufbau eines Rollenträgers für die Rollenpaare 14,23 und 31, die auf den prismatischen Schienen 13,21 und 29 des Holms 7, des Querträgers 4 und des Längsträgers 5 laufen. Ein Lagergehäuse 55 trägt zwei zueinander schräg versetzte Lagerbolzen 56, auf welchen z.B. das Rollenpaar 23 befestigt ist, dessen Rollen vorzugsweise als Zylinderrollenlager ausgebildet sind. Die Lagerbolzen 56 sind in axialer Richtung jeweils durch eine Platte 57 gesichert, welche am Lagergehäuse 55 aufliegt und mittels zweier Schrauben 58 am Lagerbolzen 56 angeschraubt ist. Über Schmiernippel 59 erfolgt die Schmierung der Zylinderrollenlager. Mittels drei Schrauben 60 und zwei Stiften 60' wird das Lagergehäuse 55 z.B. mit dem Wagen 1 verbunden. An der Stirnseite des Lagergehäuses 55 ist eine Abstreiferplatte 61 mittels zweier Schrauben 62 befestigt. Am Ende der Abstreiferplatte 61 sind zwei Abstreifer 63 aus Gummi od.dgl. jeweils mittels zwei Schrauben 64 befestigt.

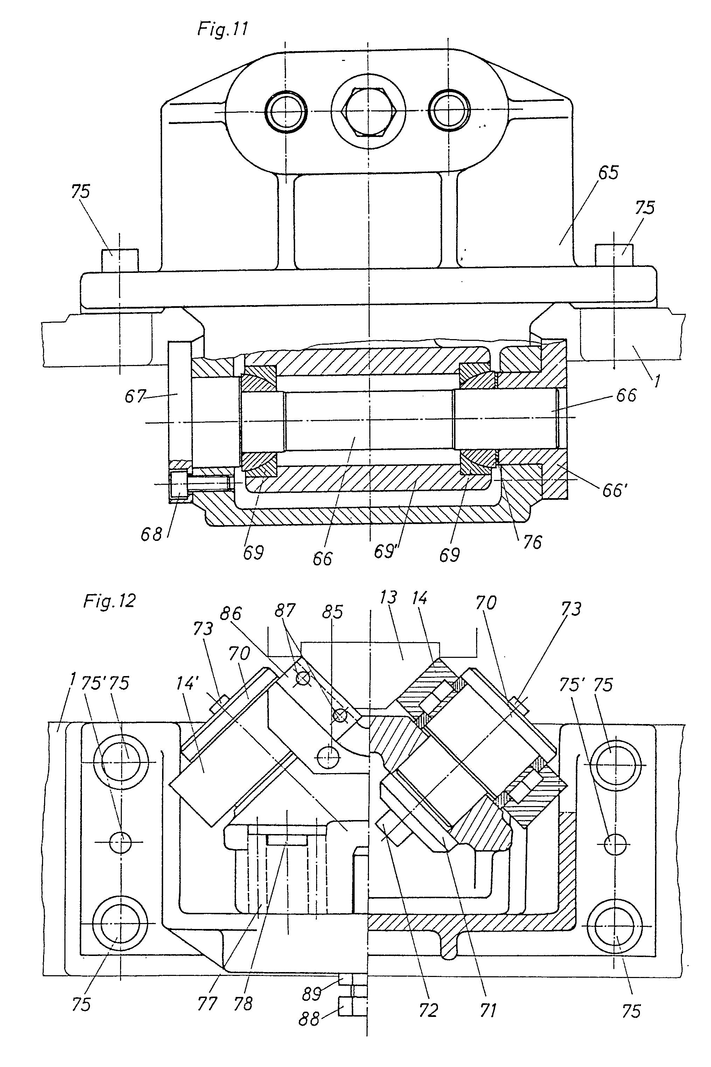

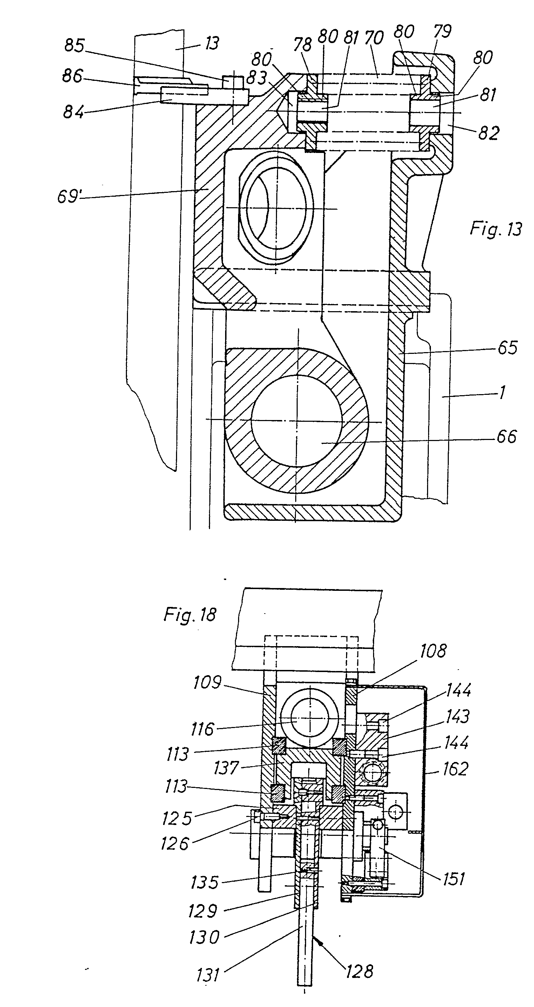

Die Fig. 11 bis 13 zeigen den Aufbau eines Rollenträgers für die gefederten Rollenpaare 14', die auf der prismatischen Schiene 13 auf einer Seite des Holms 7 laufen. Ein Lagergehäuse 65 trägt eine beidseitig im Lagergehäuse gelagerte Achse 66, die auf einer Seite in einer Lagerbüchse 66' gelagert ist und auf der anderen Seite einen Kopf 67 aufweist, der mittels einer Schraube 68 starr mit dem Lagergehäuse 65 verbunden ist. Der Rollenträger wird durch einen schwenkbar auf der Achse 66 auf zwei Schräggelenklagern 69 gelagerten Schwenkarm 69' gebildet, der an seinem freien Ende zwei zueinander schräg versetzte Lagerbolzen 70 trägt, auf welchen das Rollenpaar 14' befestigt ist, dessen Rollen vorzugsweise als Zylinderrollenlager ausgebildet sind. Die Lagerbolzen 70 sind in axialer Richtung jeweils durch eine Platte 71 gesichert, welche am Lagergehäuse 65 aufliegt und mittels zwei Schrauben 72 am Lagerbolzen 70 angeschraubt ist. Über Schmiernippel 73 erfolgt die Schmierung der Zylinderrollenlager. Das Lagergehäuse 65 weist einen mittigen Flansch 74 auf, der vier Schrauben 75 und zwei Stifte 75' trägt, über welche das Lagergehäuse mit dem Wagen 1 verbunden ist. Zwischen der Lagerbüchse 66' und dem daran anschließenden Schräggelenklager 69 können Paßscheiben 76 eingesetzt werden, damit die Mitte des Schwenkarms 69' bzw. des Rollenpaares 14' genau mit der Mitte der prismatischen Schiene 13 fluchtet.

Am freien Ende des Schwenkarms 69' greifen zwei Druckfedern 77 an, die sich anderseits gegen das Lagergehäuse 65 abstützen. Damit die Druckfedern 77 leicht montiert, demontiert und lagemäßig fixiert werden können, sind an den Enden der Druckfedern 77 scheibenförmige Druckstücke 78 und 79 angeordnet, die beidseitig eine zylindrische Verbreiterung 80 mit einer mittigen Bohrung 81 aufweisen, wobei die Bohrung 81 des Druckstückes 78, welches am Schwenkarm 69' aufliegt, mit einem Innengewinde versehen ist. Der Außendurchmesser der zylindrischen Verbreiterung 80 ist einerseits dem Innendurchmesser der Druckfedern 77, und anderseits dem einer Bohrung 82 im Lagergehäuse 65 und einer Sackbohrung 83 im Schwenkarm 69' angepaßt, sodaß die Druckfedern 77 lagemäßig fixiert sind. Zur Montage und Demontage der Druckfedern 77 wird eine Schraube (nicht dargestellt) über die Bohrung 82 und die Bohrung 81 eingeführt und in das Innengewinde des Druckstückes 78 eingeschraubt, wodurch die Druckfedern 77 zusammengedrückt werden können und somit der Schwenkarm 69' entlastet wird. Am außenseitigen Ende des Schwenkarms 69' ist wiederum eine Abstreiferplatte 84 mittels zwei Schrauben 85 angeschraubt, wobei an der Abstreiferplatte 84 zwei Abstreifer 86 mittels je zwei Schrauben 87 befestigt sind. Zur Begrenzung der Schwenkbewegung des Schwenkarms 69' ist eine Anschlagschraube 88 mit Gegenmutter 89 im Lagergehäuse 65 vorgesehen.

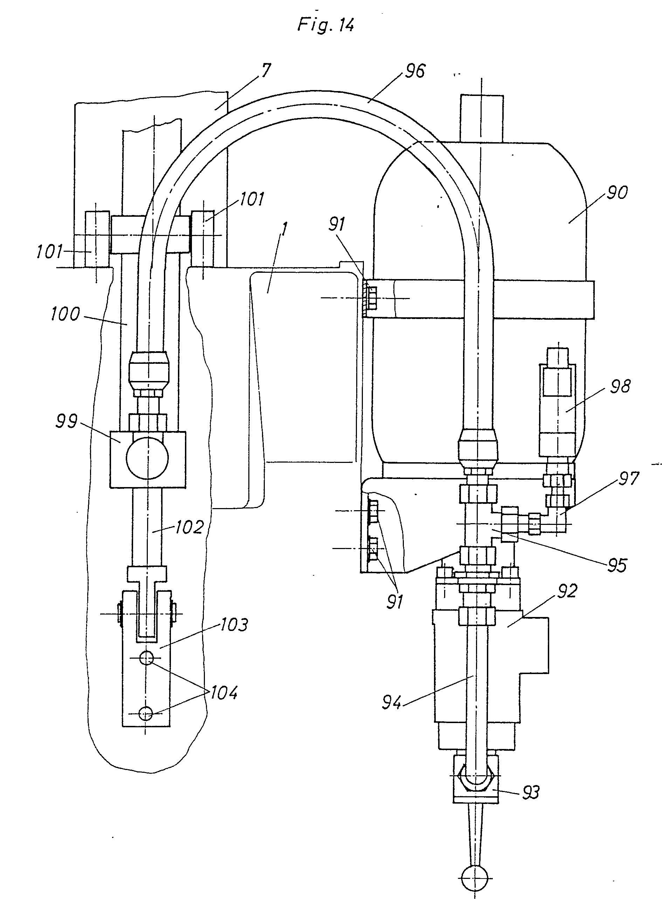

In Fig. 14 bezeichnet 90 einen Druckbehälter einer Gewichtsausgleichseinrichtung für den Holm 7, wobei der Druckbehälter eine Hydraulikflüssigkeit enthält, die unter dem Druck eines gasförmigen Mediums, z.B. komprimierte Luft, steht. Der Druckbehälter ist mittels Schrauben 91 am Wagen 1 befestigt. Am unteren Ende des Druckbehälters ist eine Hydraulikarmatur 92 mit einem händisch betätigbaren Absperrhahn 93 angeflanscht. Vom Absperrhahn 93 führt eine starre Leitung 94 zu einem T-Stück 95, von dem einerseits ein Hydaulikschlauch 96 wegführt, und an dem anderseits ein Kniestück 97 angeschlossen ist, an welches ein Druckschalter 98 zur Überwachung des Drucks angeschlossen ist. Der Hydraulikschlauch 96 mündet in ein Anschlußstück 99 eines hydraulischen Zylinders 100, welcher lotrecht stehend am Wagen 1 über Klötze 101 angeschraubt ist. Die vom unteren Ende des hydraulischen Zylinders 100 herausragende Kolbenstange 102 ist gelenkig mit einer Lasche 103 verbunden, welche mittels Schrauben 104 an einer schienenfreien Seite des Holms 7 befestigt ist. Je nach der höhenmäßigen Stellung des Holms 7 herrscht im Druckbehälter 90 ein Druck zwischen 14 und 20 bar.

Die Fig. 15 bis 18 zeigen eine bevorzugte Ausführungsform einer Greifvorrichtung zum Erfassen von Wellen, Kurbelwellen od.dgl., welche am unteren Ende des Holms 7 befestigbar ist. Zu diesem Zweck ist eine Tragplatte 105 am Holm 7 mittels mehrerer Schrauben 106 angeschraubt (Fig.17). Die Tragplatte 105 ist mit zwei Leisten 107 versteift, die mittels Schrauben 107' mit der Tragplatte 105 verbunden ist (Fig.15). Wie aus Fig. 17 ersichtlich ist, ist nur der linke Greifer der vorzugsweise aus zwei identischen Greifern bestehenden Greifvorrichtung dargestellt. Eine Vorderwand 108 und eine Rückwand 109 bilden zwei Tragelemente für die Einzelteile des Greifers. Die Vorder-und Rückwand 108,109 sind an den oberen Ecken über je einen Verbindungsklotz 110 mittels Schrauben 111 und Stiften 112 miteinander verbunden. Etwa in halber Höhe der Vorder- bzw. Rückwand 108, 109 sind innenseitig je zwei im Abstand zueinander angeordnete waagrecht verlaufende vierkantige Führungsleisten 113 an der Vorderwand 108 und an der Rückwand 109 angeschraubt, die als Führung für zwei Schieber 114 dienen, die jeweils über einen Verbindungsteil 115 mit den Anschlußstücken an den Enden eines hydraulischen Zylinders 116 verbunden sind, der somit "schwimmend" gelagert ist. Am unteren Ende jedes Schiebers 114 ist ein halbkreisförmiges Druckstück 117 angeschraubt. Jedes Druckstück 117 befindet sich im offenen Zustand des Greifers oberhalb der Drehachse 118 jedes Greifarms 119, der jeweils aus einem auf der Drehachse 118 starr befestigten Schwenkteil 120, und einem an letzteren angeschraubten Hebel 121 besteht. Der Schwenkteil 120 weist auf seiner oberen Seite einen zunächst halbkreisförmig und anschließend schräg nach oben verlaufenden Kurvenzug 122 auf, auf welchem das Druckstück 117 gleitet. Jede Drehachse 118 ist mittels Lagerbuchsen 123 in der Vorder- und Rückwand 108,109 drehbar gelagert. Die starre Verbindung mit dem Schwenkteil 120 ist durch eine Paßfeder 124 gewährleistet. Bei Betätigung des hydraulischen Zylinders 116 werden somit die Druckstücke 117 in waagrechter Richtung nach außen bzw. nach innen gedrückt und die Schwenkteile 120 nach innen bzw. nach außen verschwenkt. Unterhalb der Führungsleisten 113 befindet sich mittig ein Distanzstück 125, welches mittels Schrauben 126 und Stiften 127 an der Vorder- und Rückwand 108,109 befestigt ist und zur lotrechten Führung eines Keilschiebers 128 dient. Der Keilschieber 128 besteht aus zwei Platten 129,130, die in einer rechteckförmgien Ausnehmung des Distanzstücks 125 geführt sind und am oberen Ende eine Abstufung aufweisen, die am Rand der Ausnehmung des Distanzstücks 125 aufliegt. Ein Schieber 131 ist in mittigen Nuten der Platten 129, 130 lotrecht verschiebbar angeordnet und mit einer Rasteinrichtung 132 versehen, die ein Fixieren des Schiebers 131 zwischen den Platten 129,130 ermöglicht. Zu diesem Zweck ist der Schieber 131 mit keilförmigen Vertiefungen 133 versehen, in welche ein federnd gelagertes Raststück 134 einrastet. Der Schieber 131 trägt am oberen Ende eine Schraube 135, die in einem lotrecht ausgerichteten Langloch 136 in der Platte 130 geführt ist, sodaß der Schieber 131 bei Freigabe der Rasteinrichtung 132 nicht nach unten fällt. Die oberen Enden der Platten 129,130 sind abgeschrägt, wobei der Steigungswinkel der Abschrägung mit dem eines Keils 137 übereinstimmt, der zwischen den beiden Schiebern 114 ebenfalls auf den Führungsleisten 113 waagrecht verschiebbar angeordnet ist. Wie aus Fig. 16 und 17 hervorgeht, ist der Keil 137 über eine Schraube 138 mit einem Mitnehmer 139 verbunden, an welchem eine Platte 140 angeschraubt ist. Am Mitnehmer 139 ist auch ein Ende eines Bolzens 141 mittels eines Stiftes 142 befestigt, dessen anderes Ende in einer Halterung 143 waagrecht verschiebbar gelagert ist, welche mittels Schrauben 144 an der Vorderwand 108 befestigt ist. Der Bolzen 141 trägt eine Druckfeder 145, die sich einerseits gegen die Halterung 143 und anderseits gegen den Mitnehmer 139 abstützt, sodaß der Keil 137 in der Darstellung nach Fig. 16 nach links, bzw. in der Darstellung nach Fig. 15 nach rechts gedrückt wird. In Verlängerung der Längsachse des Bolzens 141 ist ein hydraulischer Zylinder 146 außenseitig an der Vorderwand 108 befestigt, dessen Stößel 147 am Ende des Bolzens 141 beim Mitnehmer 139 angreift, sodaß bei Betätigung des hydraulischen Zylinders 146 der Keil in der Darstellung nach Fig. 16 nach rechts, bzw. in der Darstellung nach Fig. 15 nach links, zur Kraft der Druckfeder 145 entgegengerichtet, gedrückt wird. In der Höhe der Platte 140 sind außenseitig an der Vorderwand 108 zwei induktive Annäherungsschalter 147, 148 angebracht, wobei der Schalter 147 auf die Endstellung der Platte 140 bei entspannter Druckfeder 145 und der Schalter 148 auf die Endstellung der Platte 140 bei gespannter Druckfeder 145 anspricht. In ähnlicher Weise wird die Schwenkstellung der Greifarme 119 mittels zwei induktiven Annäherungsschaltern 149,150 überwacht, die ebenfalls außenseitig an der Vorderwand 108 befestigt sind und je auf die Stellung einer Klemmplatte 151 ansprechen, welche auf den Drehachsen 118 befestigt sind. Sind die Greifarme 119 ganz geöffnet, so liegen die Klemmplatten 151 an den Schaltern 149,150 an, wobei die Offenstellung der Greifarme 119 mechanisch durch zwei Druckstücke 152 begrenzt wird, die am Distanzstück 125 angeschraubt sind und als Anschlag für die Schwenkteile 120 dienen.

Die beiden Greifer sind auf der Tragplatte 105 in waagrechter Richtung verschiebbar und fixierbar, damit die Greifvorrichtung an die Länge der Werkstücke anpaßbar ist. Die Verbindungsklötze 110 weisen hiezu eine zur Tragplatte 105 hin ausgerichtete Ausnehmung auf, in der eine Zentrierung 153 verschiebbar angeordnet ist. Die Zentrierung 153 ist am Ende abgeschrägt und untergreift das ebenfalls abgeschrägte Ende der Tragplatte 105.

Am anderen Ende weist die Zentrierung 153 ein Sackloch 154 mit Innengewinde auf, in welches eine Gewindespindel 155 eingreift, die über eine Bohrung 156 aus dem Klotz 110 herausgeführt ist und am Ende eine Mutter 157 trägt. Die Mutter 157 ist mit einem Stift 158 auf der Gewindespindel 155 fixiert und stützt sich über eine Scheibe 159 außen am Klotz 110 ab. Auf der Innenseite des Klotzes 110 ist die Gewindespindel 155 durch einen Bund 160 verstärkt, der sich über eine Tellerfeder 161 am Klotz 110 innenseitig abstützt. Die Schrägflächen der Zentrierung 153 und der Tragplatte 105 sind mit einer feinen Verzahnung versehen, damit eine Sicherheit gegen eine Verschiebung des Greifers relativ zur Tragplatte 105 gewährleistet ist und eine Einstellung des Abstands der beiden Greifer in kleinen Schritten erfolgen kann. Die an der Außenseite der Vorderwand 108 liegenden Teile sind durch eine Abdeckung 162 geschützt.

Anschließend wird die Funktionsweise der Greifvorrichtung erläutert. Zuerst wird über die induktiven Annäherungsschalter 149 und 150 kontrolliert, ob die Greifarme 119 geöffnet sind. Gleichzeitig wird mit dem induktiven Annäherungsschalter 148 überprüft, ob sich der Keil 137 in der nach Fig. 15 gezeigten Lage befindet. Sind beide Bedingungen eingehalten, so wird die Greifvorrichtung soweit abgesenkt, bis der Keilschieber 128 nach Berühren des Werkstükkes durch den Schieber 131 etwas angehoben wird, worauf der hydraulische Zylinder 146 freigegeben wird und die Druckfeder 145 den Keil 137 über den Mitnehmer 139 soweit nach rechts verschiebt (Fig.15), bis die schräge Fläche des Keils 137 satt auf der schrägen Fläche des angehobenen Keilschiebers 128 bzw. der Platten 129,130 aufliegt, wodurch das Werkstück in lotrechter Richtung fixiert ist. Anschließend wird der hydraulische Zylinder 116 betätigt und die Greifarme 119 in Schließstellung gebracht, bis ein erhöhter Druck in der Zuleitung zum Zylinder 116 anzeigt, daß die Greifarme 119 das Werkstück berühren, worauf der Greifvorgang beendet ist.

Bewegt sich der Keil 137 während des Greifvorganges ganz nach rechts, so gibt der induktive Annäherungsschalter 147 das Signal, daß kein Werkstück vorhanden ist, da der Keilschieber 128 nicht angehoben wurde, worauf der Greifvorgang unterbrochen wird. Wenn Druckstücke 117 der Schieber 114 am Ende des Greifvorganges auf dem schräg verlaufenden Kurvenzug 112 der Schwenkteile 120 zu stehen kommt, ist eine selbsthemmende Wirkung gegeben, wodurch das Werkstück auch bei Ausfall der Hydraulikanlage sicher gehalten wird.

**Patentansprüche**

1. Industrieroboter der Portalbauweise für Handhabungs-und/oder Fertigungs-und/oder Prüfaufgaben an einem Werkstück, Geräteteil od.dgl., in X-und/oder Y-Richtung sowie in Z-Richtung, bestehend aus einem mittels zumindest vier Rollen auf einer Brücke fahrbar gelagerten Wagen, auf welchem eine Rollenführung für einen lotrecht verschiebbaren Holm, Träger od.dgl. angeordnet ist, an dessen unterem Ende eine Greifvorrichtung für das Werkstück od.dgl. angebracht ist, dadurch gekennzeichnet, daß der Holm od.dgl. mit einer hydraulisch betriebenen Gewichtsausgleicheinrichtung verbunden ist.

2.Industrieroboter nach Anspruch 1, dadurch gekennzeichnet, daß die Gewichtsausgleicheinrichtung aus einem am Wagen (1) befestigten Hydraulikzylinder (100) besteht, dessen Kolbenstange (102) mit dem Holm (7) od.dgl. verbunden ist, wobei vom Hydraulikzylinder (100) ein Hydraulikschlauch (96) zu einem Druckbehälter (90) führt, in welchem die Hydraulikflüssigkeit unter dem Druck eines gasförmigen Mediums steht.

Fig.4

Fig.1

Fig. 2

Fig. 3

Fig.5

Fig.6

EP 0 320 498 A2

Fig. 7

53    54

51    49

43

44    45    46

47

48    48

1

22

Fig.10

21

63

61    55

1

Fig. 8

Fig. 9

Fig.11

Fig.12

85
86
84
69'

80
83

78 80 81 70 80 79
80

81
82

13

Fig. 13

65
1
66

Fig. 18

109
116
113
137
113
125
126
135
129
130
131

108
144
143
144
162

151

128

Fig. 14

Fig. 15

Fig.16

*Fig.17*